# EUROPEAN PATENT SPECIFICATION

(11) **EP 2 622 212 B1**
(45) Date of publication and mention of the grant of the patent: **20.01.2016**
(21) Application number: 11790890.5
(22) Date of filing: 29.09.2011
(51) Int. Cl.: F03D 3/06

(54) **VERTICAL AXIS WIND TURBINE HAVING ONE OR MORE MODULAR BLADES**
WINDTURBINE MIT VERTIKALER ACHSE MIT EINER ODER MEHREREN MODULAREN SCHAUFELN
ÉOLIENNE À AXE VERTICAL POURVUE D'UNE OU DE PLUSIEURS PALES MODULAIRES

(30) Priority: 29.09.2010 GB 201016392
(43) Date of publication of application: 07.08.2013
(73) Proprietor: Nenuphar, 59800 Lille (FR)
(72) Inventor: SILVERT, Frederic, F-59000 Lille (FR); SMADJA, Charles, F-59000 Lille (FR)
(74) Representative: Holtz, Béatrice
(86) International application number: PCT/EP2011/067051
(87) International publication number: WO 2012/041991

(56) References cited:
- EP-A1- 1 746 286
- WO-A2-2010/128390
- DE-A1- 2 948 060
- DE-A1- 4 122 919
- DE-A1- 10 125 299
- JP-A- 2005 248 931

## Description

The present invention relates to a vertical axis wind turbine comprising one or more modular blades having a novel means for connecting adjacent blade segments.

Wind turbines and windmills have been used for centuries to harness the energy from the wind. Typically, conventional wind turbines have been of a horizontal axis type construction, with blades arranged around a horizontal shaft. However, vertical axis wind turbines (VAWTs) are also known. In wind turbines of a vertical axis construction, the blades are typically arranged around a central, vertical mast and are connected to the mast by means of one or more support arms.

A number of different types of VAWT exist, each having a different arrangement and configuration of the blades. For example, in an H-type VAWT, the blades are typically arranged substantially vertically at an approximately constant distance from the central mast and the aerodynamic flow and associated angle of attack are almost constant along the length of the blade. Unlike with horizontal axis wind turbines (HAWTs), it is therefore possible to use blades for an H-type VAWT which have a substantially constant cross-sectional shape and dimensions along the length of the blade.

Other types of VAWT incorporate curved blades. For example, in an 'egg-beater' or troposkein formation, the ends of each blade are mounted at the central mast and between the ends, the blade curves outwardly from the mast. Such blades are commonly formed of extruded aluminium and the shape of the blades allows the centrifugal loads in the blades to be transmitted to the central mast through tensile stresses in the extruded aluminium core of the blade. However, the egg-beater formation of blades in a vertical axis wind turbine has a relatively lower aerodynamic efficiency when compared to other types of VAWT presenting identical swept surface areas.

In recent years, helical blades have also been developed for small, urban turbines. Such helical blades, which extend around the central mast, experience aerodynamic loads presenting significantly smaller amplitudes of variation over a full blade revolution, and therefore advantageously minimise noise emission levels. However, the shape of helical blades is relatively complex compared to the alternatives described above. Whilst for small scale turbines, helical blades can be formed of hollow, extruded materials such as aluminium or plastic, for larger scale blades which are subjected to higher aerodynamic loading during use, it becomes necessary to use moulded, composite materials.

With the development of increasingly large wind turbines, there is a demand for wind turbine components of increasing size. In particular, there is a need to continue increasing the size and length of the blades such that the conversion of wind energy to electrical energy can be optimised. However, as the dimensions of the wind turbine blades increase, it becomes more difficult to manufacture and transport the blades in a single piece and the associated costs increase significantly. In particular, whilst helical blades are desirable for their optimised aerodynamic rotor loading and minimised noise emissions, the overall size of helical blades that can be produced is limited because of the complex shape and large dimensions of the mould required to manufacture the blades.

One such vertical axis wind turbine is described in EP 1,746,286 A1. This document describes a support arm installation structure, and an associated wind turbine. The support arms secure the blades of the vertical axis wind turbine, and the structure further comprises hubs placed on the side of a rotary shaft of a rotor for radially arranging support arm fixing parts having the same shape as the outer shape of the support arms and secured by pressing the support arms. Nevertheless, the wind turbine of EP 1,746, 286 A1 still has disadvantages.

It would therefore be desirable to provide a vertical axis wind turbine with a novel blade assembly, which allows for the efficient production of larger blades without significantly increasing the size or costs of the apparatus required for moulding and transporting the blades. It would be particularly desirable if such a blade assembly could be adapted for producing blades having a substantially helical configuration, as well as for other curved and straight blades.

According to the invention there is provided a vertical axis wind turbine comprising: a substantially vertical, central mast; one or more modular blades, each blade having an upper tip end and a lower tip end and comprising two or more connected blade segments; and at least one support arm extending outwardly from the central mast. Each blade segment is defined by a longitudinal axis and a transverse airfoil cross section and the ends of adjacent blade segments are connected together by means of a connection arrangement provided between the adjacent blade segments. The peripheral end of each support arm is connected to one of the blades through the connection arrangement of that blade. Each blade is configured to extend around the central mast such that the upper and lower tip ends of the blade are angularly displaced from each other about the central mast by an angle of α degrees, wherein α is greater than zero. The turbine further comprises at least one support arm extending outwardly from the central mast, wherein the peripheral end of each support arm is connected to one of the blades through the connection arrangement of that blade; and one or more additional support arms extending outwardly from the central mast and each connected to one of the blades at a position between the distal ends of a blade segment.

The term "vertical axis wind turbine" (VAWT) is used to refer to a wind turbine for the conversion of wind energy to electrical energy in which the wind turbine blades are mounted for rotation around a central, vertical axis. This type of wind turbine would be known to the skilled person. Well known VAWT constructions include the H-type or "Darrieus" VAWT, which include vertical blades mounted around a central shaft. Other known types of VAWT incorporate a helical blade configuration, or a troposkein ("egg beater") blade configuration.

Vertical axis wind turbines of the present invention find application as onshore wind turbines for use on land as well as offshore wind turbines. For example, in certain embodiments wind turbines according to the invention may be floating wind turbines for offshore use.

The present invention provides a modular blade construction, where each blade of the vertical axis wind turbine is formed of two or more connected blade segments, or modules. Adjacent blade segments are connected by means of a separate connection arrangement which is provided between the blade segments and which also connects the blade to a support arm.

The two or more blade segments forming each modular blade are connected together such that the blade extends around the central mast with the upper and lower tip ends of the blade angularly displaced from each other about the central mast by an angle of α degrees, wherein α is greater than zero. The angle α corresponds to the azimuthal angle between the upper and lower tip ends of the blade. This can be measured by taking the two vectors extending between a point on the central mast and each of the tip ends and projecting those vectors onto a substantially horizontal plane coinciding with the point on the central mast, then measuring the angle between the projections in the horizontal plane to provide the azimuthal angle.

The use of a modular blade is particularly suitable for the vertical axis construction of wind turbine, since in a VAWT the blade mechanical loading is more evenly distributed along the blade than in a horizontal axis wind turbine (HAWT). This is at least partly due to the different mounting arrangements of the blades in the different types of wind turbine.

In a HAWT, the blades are connected to the main rotor shaft at the blade root only and the blade then extends away from the rotor shaft. Mechanical loading is highest at the blade root, since the root is subjected to the highest centrifugal and bending forces and must support the weight of the blade as well as the aerodynamic loads applied over the entire blade.

On the other hand, in a VAWT such as that of the present invention, the blades are connected to a central rotating shaft or mast by one or more support arms. The support arms transfer the torque from the blades to the central mast and must support not only the weight of the blade but also the centrifugal loading and the aerodynamic torque that drives the generator.

However, the arrangement of the support arms means that the mechanical loading is more evenly distributed along the blades and unlike in a modular HAWT blade, the centrifugal and aerodynamic loading of each blade segment in a VAWT blade is directly transferred to the central mast through the support arms, without increasing the loading of any adjacent blade segments. It is therefore possible to manufacture the VAWT blades in several segments that withstand lower stress levels and reduce the overall weight of the blades.

By integrating the attachment of a support arm to the blade with the connection of adjacent blade segment by means of the connection arrangement, the overall strength of the connection between the blade segments is significantly improved and in particular, the loading on the connection arrangement is minimised. Furthermore, the support arm can be connected to the blade without adversely affecting the mechanical integrity of the blade segment and without significantly penalising the aerodynamic efficiency of the blade.

Preferably, the segments of the blade are connected to each other in a longitudinal direction, so that the blade is segmented along its length. Where the blade is substantially straight, the blade segments will therefore be assembled one on top of each other in a straight line. Alternatively, where the blade is a curved blade or where the overall shape of the blade approximates a curved shape (the blade being made of straight segments adjusted in such a way that they follow a curved shape), the blade segments are assembled together along the length of the curve. Preferably, the cross section of the ends of adjacent blade segments which are to be connected together are similar or preferably substantially identical so that the only required connections are the connections between the blade segments in a longitudinal direction.

Each blade segment of the blades according to the present invention can be manufactured separately and since the blade segments will typically be significantly shorter in length than the overall blade, the production facility and in particular the mould for producing the blade segments can be kept relatively short. This makes the manufacture of the blade segments both simpler and more cost effective than the production of a one piece blade.

In addition, the blade segments can be transported individually and assembled on site. Advantageously, this means that smaller and more cost effective transport means can be used and that smaller and lower capacity installation and handling equipment, such as cranes, are suitable.

The use of a modular blade also improves the efficiency and cost of maintenance of the blades, since in the case of blade failure or damage, it is possible to replace only the defective or damaged blade segment whilst retaining the other blade segments. As well as minimising the materials and parts required to provide a replacement segment, the amount of material to be scrapped is also minimised, thereby reducing the financial losses as well as the losses of time and material associated with the scrappage.

A modular blade construction additionally provides greater flexibility in the overall length of the blade, so that the blade can be adapted depending upon the environment and the energy requirements of the turbine. Different length blade segments can readily be manufactured and assembled in different configurations to achieve different lengths of blade and different positions of the joints.

Each blade comprises at least an upper blade segment at the top end providing the upper tip end of the blade, and a lower blade segment at the bottom end providing the lower tip end of the blade. One or more additional, intermediate blade segments are preferably provided between the upper and lower blade segments.

The use of one or more intermediate blade segments may advantageously enable the shape of the blade to be optimised from an aerodynamic perspective. As described in more detail below, the blade may be constructed of multiple blade segments that are each individually formed with a straight configuration, but which can be connected together to approximate a curved configuration in order to improve the aerodynamic performance of the blade.

Using straight blade segments, it is possible to achieve an optimum curved configuration by twisting the blade about its longitudinal axis, wherein the twist angle varies in a non-linear manner along the blade segment. However, the manufacture of blades with a non-linear variation in twist angle is more complex than the manufacture of blade segments with a linear variation in twist angle. By increasing the number of straight blade segments from which a blade with a given angle α is formed, it is possible to approximate a curved configuration of blade using blade segments with a variation in twist angle that can be linear without having too great a deviation from the optimum non-linear twist angle at any position along the blade segment. In this way, the use of one or more intermediate blade segments can enable an aerodynamically efficient blade to be formed using simpler and cheaper manufacturing techniques.

The use of a larger number of blade segments to form a blade which approximates a curved configuration may provide a further advantage in simplifying the manufacture of the moulds required to form the blade segments. Each blade segment forming a blade with a curved configuration is tilted about two horizontal axes. This means that the cross section of the blade segment in a direction that is normal to the longitudinal twist axis of the blade segment (the geometric cross section) is different from the cross section of the blade segment in a horizontal direction when the turbine rotation axis is vertical (aerodynamic cross section). As a result, when one cross-section is symmetric, the other will be asymmetric.

The optimum aerodynamic cross section of a blade segment is substantially symmetrical. However, during manufacture of the moulds for forming the blade segments, it is preferable to use moulds with a symmetric geometric cross section, since this enables the upper and lower parts of the mould to be constructed from the same pattern. The produced blade segments therefore have a symmetric geometric cross section but an asymmetric aerodynamic cross section.

By increasing the number of blade segments from which a blade of a given angle of extension (α) is formed, it is possible to reduce the difference between the actual asymmetric aerodynamic cross section and the optimum symmetric aerodynamic cross section. In this way, it is possible to use the moulds with a symmetric geometric cross section, without significantly impacting the aerodynamic properties of the blade.

Each blade may be formed of two or more blade segments and the number of blade segments can be selected depending upon the desired size and configuration of the blades. A connection arrangement is provided at each junction between adjacent blade segments and therefore a blade having 'n' segments will include 'n-1' connection arrangements. The 'n-1' connection arrangements may be the same as each other, or different. A support arm will be connected to each of the connection arrangements and so the blade will be connected to the mast by a minimum of 'n-1' support arms. Additional support arms are provided at one or more positions away from the connection arrangements, as described in more detail below.

The modular construction of the blades in the turbine of the present invention can readily be adapted for a wide variety of blade configurations.

In certain embodiments of the present invention, the longitudinal axis of each of the blade segments is substantially straight. This is advantageous, since the straight segments can be manufactured more efficiently without the need for complex production tools and in particular, without the need for complex mould shapes. The straight segments can also be transported more efficiently since the overall dimensions of each segment are significantly smaller than the dimensions of curved blades, in which the curvature increases the overall width of the blade.

In alternative embodiments of the present invention, each blade segment may have a curved longitudinal axis so that the blade segments can be connected together to form a blade having a continuous curvature. This type of curved blade configuration may be suitable, for example, for forming a turbine having egg-beater shaped or helical blades.

An individual blade may extend only partway around the mast, so that the angle α is less than 360 degrees. This may be preferred, for example, where two or more blades are provided. Alternatively, an individual blade may extend all of the way around the central mast, so that the angle α is approximately 360 degrees. Alternatively again, an individual blade may extend more than once around the central mast, so that the angle α is greater than 360 degrees. This may be preferred, for example, where only a single blade is provided.

Preferably, the angle α is between 60 degrees and 180 degrees, so that each blade extends between one sixth and one half of the way around the central mast. In one particularly preferred example of the present invention, the angle α is approximately 120 degrees.

The two or more blade segments may extend in a single, straight line between the angularly displaced upper and lower tip ends to provide straight blades which are at an angle to the vertically, central mast, rather than substantially parallel thereto. More preferably, the two or more blade segments of each blade are connected such that the blade is curved or bent around the central mast between the angularly displaced upper and lower tip ends.

In certain embodiments, the length of each support arm is substantially the same as the distance between the blade and the central mast is therefore relatively constant along the length of the blade, so that the blade and each of the blade segments follows as closely as possible the surface of a cylinder or an helix having a radius substantially equal to the length of the support arm. However, in alternative embodiments, the lengths of the support arms connecting a blade to the central mast may be different to each other so that the distance between the blade and the central mast varies along the length of the blade. In this case, each of the blades and blade segments follows as closely as possible the surface of the truncated cones defined between consecutive support arms of the blade, or any surface described by parabolic curves intercepting the circles described by consecutive support arms of the blade.

In one particularly preferred embodiment, the blade is formed of two or more blade segments which each have a straight, longitudinal axis and which are connected together such that the longitudinal axes of adjacent blade segments form an angle to each other in at least one of the horizontal and vertical planes, rather than being aligned along the same line. Preferably, the angle between the longitudinal axes of adjacent blade segments is less than 45 degrees in both the horizontal plane and the vertical plane. This means that a blade segment is tilted at an angle of less than 45 degrees away from the straight line defined by the longitudinal axis of the adjacent blade segment. The angle can be selected depending upon the size of angle α, the overall height of the blade and/or the radius of the support arm.

The blade segments forming each of the one or more blades may each have a substantially straight longitudinal axis, or a curved longitudinal axis, or a combination of straight and curved blade segments may be used.

Using this arrangement, it is advantageously possible to approximate a helical blade configuration in which a blade extends around the central mast, but in which the blade is formed of a number of connected segments, each having a substantially straight longitudinal axis. The advantages associated with the use of a helical blade, as described above, can therefore be provided but the modular arrangement of straight blade segments allows for the use of relatively simple moulds. This in turn allows for the possibility of developing a competitive and large scale manufacturing process for the production of helical blades. Furthermore, the invention allows for the production of significantly larger helical (or approximately helical) blades than have been previously possible, without the need to increase the size of the production or transport apparatus. The problems previously associated with increased loading on larger helical blades are substantially avoided through the connection of the support arms to the connection arrangements between blade segments.

The swept area of a turbine according to the invention having an approximately helical configuration may be almost equivalent to the area swept by the same wind turbine with straight, vertical blades. Therefore, the overall aerodynamic performance is approximately the same for both configurations. However, unlike with straight blades, when using a blade configuration that approximate a helix, dynamic stall does not occur at the same moment along the whole length of the blade, but only along a limited portion of the blade. Dynamic stall is therefore not an abrupt phenomenon generating large and sudden variations of the aerodynamic loads, but instead occurs in a continuous way over a complete blade revolution because the parasitic effects of dynamic stall are limited to the blade portions experiencing large aerodynamic angles of attack.

The aerodynamic torque of an approximately helical blade configuration also presents a mean value that is similar or substantially identical to a corresponding straight, vertical blade configuration of similar rotor swept area, but in the approximately helical configuration, the magnitude of the variation between the maximum and minimum values of torque around this mean value is significantly minimised. The variation of the mechanical torque of the wind turbine over a full blade revolution is therefore also considerably decreased, which relieves the operating requirements of the electrical generator. For blade configurations in which the total angular coverage of the one or more blades is less than 360 degrees, a higher value of angle α results in a lower variation of the mechanical torque produced by the blade around its mean value. For blade configurations in which the total angular coverage, *i.e.* the sum of the angular coverages or extensions of all of the one or more blades, is greater than 360 degrees, the variation of mechanical torque is minimised where the total angular coverage is an integer multiple of 360 degrees, i.e. where the one or more blades extend a total of 'm' times around the central mast, where 'm' is an integer.

Vertical wind turbines and blade assemblies according to the present invention may comprise a single blade, or may comprise two or more blades spaced apart around the central mast and each extending around the central mast. Where two or more blades are provided, the blades are preferably of the same size and configuration as each other, and are formed of the same number of connected blade segments. However, it might also be possible to provide a turbine in which two or more blades having different configurations to each other are provided. In one particularly preferred embodiment of the invention, three modular blades are provided and preferably, the three modular blades are substantially identical in configuration. Preferably, where two or more blades are provided, each blade extends by the same angle α around the mast and in the same direction, *i.e.* clockwise or anticlockwise. Where two or more blades are provided, the angle α is preferably selected so that in combination, the blades extend substantially all of the way around the central mast.

The two or more blades may have a sufficiently low angle α and/or be sufficiently spaced apart around the mast so that there is no angular overlap between the blades. Alternatively, the blades may be arranged such that a portion of one blade at the upper tip end thereof overlaps with a portion of another blade at the lower tip end thereof. For example, in a blade assembly having three equally spaced blades, each having an angle α of 150 degrees, there will be an overlap of 30 degrees between adjacent blades.

Where a blade is formed of more than two connected blade segments, the blade will include multiple connection arrangements, each of which will be connected to a support arm extending from the central mast. Due to the extension of the blades around the central mast, the support arms will be angularly spaced apart around the mast as well as being spaced apart along the length of the mast. Where two or more substantially identical blades extend around the central mast, a support arm from each blade will be connected to the central mast at the same vertical level, but spaced apart from the other support arms at that level.

Where a blade is formed of three or more connected blade segments, each of the intermediate blade segments will be supported at both distal ends by a connection arrangement as described, whilst the upper and lower blade segments at the top and bottom ends of the blade will be supported at one end by a connection arrangement as described. In addition to the support arms or arms attached to the blade through the connection arrangements between adjacent blade segments, one or more additional support arms are provided to support the blades. In some embodiments, one or more additional support arms may be provided to support the tip ends of each blade, wherein each additional support arm is connected to the tip end of the corresponding blade. However, one or more additional support arms are provided extending outwardly from the central mast and each connected to one of the blade segments at a position between the distal ends of that blade segment to provide additional support to the blade.

In particularly preferred embodiments of the invention, at least one of the upper and lower blade segments is supported by an additional support arm connected to the blade segment at a position between the distal ends of the blade segment. This arrangement means that each additional support arm is connected to the blade segment at a position away from the connection arrangements and away from the tip end of the blade, so that the blade has free ends.

Preferably, the distance between an additional support arm and the closest tip end of the blade may be between one quarter and one half of the overall blade length and preferably around one third of the overall blade length.

Preferably, the additional support arms extend substantially horizontally from the mast in order to minimise the wake effect of the support arm and thereby optimise the efficiency of the wind turbine.

Preferably, an upper additional support arm is connected to the upper blade segment at a position between the upper tip end of the blade and the connection arrangement between the upper blade segment and the adjacent blade segment, and a lower additional support arm is connected to the lower blade segment at a position between the lower tip end of the blade and the connection arrangement between the lower blade segment and the adjacent blade segment.

Advantageously, the removal of the restriction to connect the additional support arms at the tip ends of the blade or at the points of connection between adjacent blade segments enables greater freedom and flexibility in the positioning of the additional support arms. The position of the additional support arms can therefore be adjusted for a particular wind turbine in order to minimise the level of stress in the blade and the bending moments acting on the blade during use. In addition, the positioning of the additional support arms away from the tip ends of the blade ensures that disruption of the aerodynamic performance of the blade tip is reduced.

The positioning of one or more upper additional support arms away from the upper, tip end of the blade allows the overall height of the mast to be reduced, since the mast need only extend upwards to the height of the uppermost support arm and not to the upper tip end of the blade, as would be the case if the blade was supported at the tip end. This lowers the position of the centre of gravity of the wind turbine which may be beneficial for the stability of the turbine, in particular in the case of an offshore wind turbine, such as a floating wind turbine.

Further, the positioning of one or more additional lower support arms away from the lower tip end of the blade allows the height of the base portion supporting the mast to be increased, since the mast need only extend downwards to the level of the lowermost support arm and not the lower tip end of the blade, as would be the case if the blade was supported at the tip end. This in turn enables the position of the bearing(s) guiding the main shaft of the turbine to be adjusted so that the cantilever either on the slewing bearing (unique pedestal configuration not requiring a shaft) or on the main shaft where a 2-pedestal configuration is considered and any tilting moment on the bearing(s) is reduced. In particular, the position of the upper bearings can be moved upwards relative to the base of the turbine. This adjustment in the position of the bearings will, in turn, optimise the dynamic stability of the turbine, which is important for both for onshore and offshore applications.

The additional support arms will typically be connected to the blade segments using an alternative attachment arrangement, as described below, since the point of connection does not coincide with a connection between adjacent blade segments. Suitable attachment arrangements for the additional support arms would be known to the skilled person and a preferred example is described below in which the blade segment is clamped between opposed attachment plates.

Advantageously, the number, dimensions and cross section of the support arms in the vertical axis wind turbines according to the invention can be varied in order to optimise the performance and efficiency of the turbine. For example, the projected surface area of the support arms in the wind direction can be minimised in order to reduce the undesirable drag of the support arms as they rotate during use. Each support arm may be provided substantially horizontally, which advantageously minimises the wake effects. Alternatively, each support arm may be provided at a different angle, in order to confer sound dynamic behaviour to the blade where necessary. Where a blade is supported by two or more support arms, the support arms may be connected to the blade at the same angle relative to a horizontal plane, or at different angles relative to a horizontal plane.

Each blade segment has a transverse cross section which is shaped in the form of an aerodynamic 'teardrop' or aerodynamic airfoil profile in the conventional manner. This cross section provides the blade with a rounded leading edge and an opposed trailing edge, and the leading edge and the trailing edge are connected by two 'flat' surfaces having a curvature and surface area which is significantly lower than that of the leading edge. The longitudinal axis passes through a point on the transverse cross section which corresponds to the axis about which the blade cross-section may rotate, resulting in a twisted blade configuration.

Preferably, the cross-sectional shape is substantially constant along the length of the blade segment. In certain preferred embodiments of the present invention, the cross-sectional shapes at every point along the segment may be substantially aligned so that the leading and trailing edges of the blade segment are substantially straight and substantially parallel to the longitudinal axis.

Alternatively, each blade segment may be twisted about a longitudinal twist axis so that at any point along the length of the blade segment the line joining the leading and trailing edges in the transverse airfoil cross section is tangential to the trajectory described by that transverse airfoil cross section during rotation of the blade around the central mast. This arrangement provides a similar angle of attack for the blade cross section at every point along the blade segment, which in turn maximises the wind turbine rotor aerodynamic efficiency. The longitudinal twist axis may be substantially straight, or may be curved.

In the twisted blade segments, the transverse airfoil shape at any point along the blade segment is rotated relative to the corresponding transverse airfoil shapes at adjacent points. The leading edge and trailing edges of the blade segment therefore extend around the longitudinal axis of the blade segment. The total twist angle of the blade corresponds to the angle α. For blades formed of blade segments having approximately the same length as each other, the twist angle of each blade segment will therefore typically correspond approximately to the value of angle α divided by the number of blade segments. Where the blade segments are of differing lengths, longer blade segments will require higher twist angles than shorter blade segments.

Preferably, each blade segment has the same twisted configuration and the same moulds can be used for the manufacture of all of the blade segments. The twist angle may vary continuously and linearly along the length blade segment or alternatively, the twist angle may vary non-linearly along the length of the blade segment so that certain parts of the blade segment are twisted more significantly than others. As described above, a non-linearly varying twist angle may be advantageous in blades in which a plurality of straight blade segments are connected together to approximate a curved configuration, since this optimises the approximation of the ideal blade curvature. However, as also described above, it may be preferable from a manufacturing perspective to use blade segments with a variation in twist angle that is as close to linear as possible. In particular, blade segments having a linear variation in twist angle can be more readily manufactured using pultrusion techniques, as described below.

The one or more blades of the present invention may be of a known construction comprising an outer shell and an inner, longitudinal beam or spar which is connected to the inner surface of the outer shell. In this construction, the outer shell of each blade segment is typically formed of two shell parts that are formed separately and subsequently connected together to form the complete outer shell. The outer shell parts are usually connected along the trailing and leading edges of the blade by means of a suitable adhesive. Alternatively, the blade may be formed of an integral structure that has been moulded in one piece.

The outer shell is preferably formed of composite material comprising reinforcement fibres, such as glass fibres, impregnated with a resin matrix, such as epoxy. Preferably, the outer shell is formed of pre-impregnated composite materials. Other suitable examples of composite materials include materials integrating carbon fibres and/or polyester resins. Preferably, the outer shell is formed of between three and six layers of a composite material for blades having a length of between 10 m and 15 m, although this may be higher for larger blades. The number of layers in the outer shell may vary along the length of the blade or blade segment as well as possibly along the blade chord, to account for the different strain at different parts along the length and chord of the blade or blade segment during use. This may be particularly advantageous in longer blades or blade segments.

Alternatively, the one or more blades of the present invention may be formed of an inner core that has been wrapped or covered with one or more layers of composite material that form an outer shell.

Where the one or more blades comprise an inner core, the inner core may be formed of any material having suitable density and compressibility characteristics, but is preferably formed of a foam material. Suitable materials for forming the inner core include polyurethane foam or any other polymer foam presenting similar density and compressibility ranges and ratios. The foam material may be obtained from two monomer precursors, which form a foam upon mixing. In this case, the foaming mixture can be poured into a closed mould such that the foam takes the shape of the mould as it forms. Alternatively, the core may be assembled from pre-formed foam blocks.

The inner core may comprise a single piece of core material, or may be formed of multiple cores that have been compacted and glued together, for example, by the resin from the outer layers of composite material during the blade manufacturing process.

The outer shell surrounding the inner core may be formed of the same material and construction as described above in relation to blades having an inner spar.

During manufacture of blade segments comprising an inner core, one or more layers of composite material are typically wrapped around the rigid, inner core material and the combined materials are placed in a mould and heated. During heating, the rigid core may expand to fill the mould, for example where a foam material is used, thereby compressing the outer layers of composite materials and forming the desired airfoil shape of the blade or blade segment. In addition, the outer layers of the composite materials cure and the resin within the layers infuses into the inner core to bond the outer layers and the core, as well as bonding any separate sections of the core that may be present.

Alternatively, the one or more blades of the present invention may be formed by a pultrusion method. Such methods advantageously enable inner rims to be incorporated into the blade structure in order to increase the blade stiffness and to prevent global or local buckling. In addition, pultrusion methods may enable blade segments to be manufactured with a non-linearly varying twist angle. Furthermore, an asymmetric matrix may be used in the pultrusion process to more readily form blade segments having a symmetric aerodynamic cross section, even where the geometric cross section is asymmetric.

The connection arrangement between adjacent blade segments may be of any suitable construction which allows for the connection of the blade segments to each other as well as the integration of the peripheral end of the support arm. The connection arrangement may be adapted such that the ends of adjacent blade segments about each other and the connection arrangement is provided around and/or within the blade segments. Alternatively, the blade segments may be spaced apart from each other, with at least a part of the connection arrangement between or around the ends of the adjacent blade segments.

Preferably, the connection arrangement comprises a suitable clamping arrangement for clamping the ends of adjacent blade segments together and additionally, for clamping the peripheral end of the support arm in place. The clamping arrangement may be fitted around the ends of the blade segments to clamp the blade segments directly.

For example, in one preferred embodiment, the connection arrangement comprises a pair of opposed attachment plates arranged with at least a portion of each adjacent blade segment clamped between them. The opposed attachment plates may be connected together by one or more fasteners, such as bolts, provided on either side of the blade. Alternatively, the plates may be connected by one or more fasteners passing through the portion of the blade segments between the clamping plates. This arrangement is particularly suitable for blade segments having an inner core, as described above, since the inner core provides an integral reinforcement structure that allows for holes to be drilled through the blade segments without incorporating structural weaknesses. The inner core also prevents the crushing of the blades under the clamping force of the attachment plates. During use, the inner core may additionally avoid local buckling of the outer shell of the blade during blade bending by permitting stress transfer from one side of the outer shell to the opposite side through the inner core and by preventing the blade shell from collapsing inwardly.

Furthermore, where the blade comprises an outer shell, the layers of composite material in the outer shell provide additional reinforcement to the blade. The materials used to form the inner core and the outer shell can advantageously be adapted to increase their reinforcement effect in the region of the connection arrangement, as described in more detail below. A further advantage is that no additional reinforcement structure is required within the blade.

One of the pair of opposed attachment plates is attached to the peripheral end of the support arm, either by welding, gluing or using mechanical fasteners. The other, opposed attachment plate may be provided on the opposite side of the blade segments, or may be provided as an internal blade insert, within the interior of the blade segments. For example, the opposed attachment plate may be provided within the inner core of the blade such that the fasteners extend only part way through the blade cross section.

A single pair of opposed attachment plates may be used to clamp the adjacent blade segments. Alternatively, a pair of opposed attachment plates may be provided for each blade segment, where both of the attachment plates on one side of the blade segment are fixed to the support arm.

Where one or both attachment plates are in contact with the outer surface of the blade, the surface of the attachment plate in contact with the blade is preferably shaped to substantially match the surface of the blade. This minimises stress levels in the outer shell of the blade and reduces stress concentrations.

This type of connection arrangement is also suitable for use as the attachment arrangement connecting the one or more additional support arms to the blades, where the additional support arms are connected to the blade at positions away from the connections between adjacent blade segments.

In alternative embodiments, the blade segments may comprise additional inserts at the ends, wherein the inserts may be fixed to a part of the adjacent blade segment or may be clamped together. For example, in one preferred embodiment the connection arrangement between adjacent blade segments of each blade comprises: one or more rigid inserts supported within the interior of each of the blade segments and each having a portion extending outwardly from the end of the blade segment towards the end of the adjacent blade segment; and at least one connecting member between adjacent blade segments and connected to the outwardly extending portions of the one or more rigid inserts and the peripheral end of the support arm.

This type of connection arrangement between adjacent blade segments provides a strong and stable connection which is capable of withstanding the loads to which the blades are subjected during use. The one or more rigid inserts are supported within the blade segment so that there is a fixed, strong connection between the rigid inserts and a part of the blade segment. The form of the connection will depend upon the construction of the blade segment.

In one preferred embodiment, the blade segment comprises an outer shell formed of one or more layers of a composite material and the one or more rigid inserts within the blade segment are connected to the outer shell by means of one or more reinforcement rims or webs of a composite material extending between the one or more rigid inserts and the internal surface of the outer shell. The one or more rigid inserts are thereby supported by the internal reinforcement structure provided by the one or more reinforcement rims.

Preferably, each of the one or more rigid inserts comprises an outer layer of a composite material. For example, a layer of composite material may be wrapped around each of the rigid inserts. Where the rigid insert is formed of a non-composite material, such as a metal, the surface of the rigid insert is preferably provided with teeth or grooves to facilitate the wrapping of an outer composite layer around the insert and to facilitate the bonding of the rigid insert to the reinforcement rims, where present. In addition, the presence of the teeth or grooves in the outer surface of the rigid insert allows the level of stress transmitted by the rigid insert to the structure of the blade segment to be progressively decreased.

In blades having the construction of an outer shell and an inner spar, as described above, the one or more rigid inserts in a blade segment are preferably connected to the outer shell of each blade segment by means of the structure composite reinforcement rims described above, which extend between the rigid inserts and the inner surface of the outer shell.

In blades having an inner core, as described above, the one or more rigid inserts are preferably embedded within the inner core at each end of the blade segment which is to be connected to an adjacent blade segment in the assembled blade. The rigid inserts are supported within the blade segment by means of being embedded within the inner core material. In addition, the rigid inserts may be connected to the outer shell by means of one or more composite reinforcement ribs that are incorporated into the inner core and which extend through the inner core between the one or more rigid inserts and the inner surface of the outer shell.

The extent to which the inserts are required to outwardly extend beyond the end of the blade segments will depend upon the construction of the at least one connecting member to which the inserts are connected. A sufficient length must be provided beyond the end of the blade segment so that a secure connection can be made with the at least one connecting member.

The rigid inserts may be formed of any suitable rigid material which is capable of withstanding the loading to which the insert will be subjected during use and which is capable of providing a secure connection to the at least one connecting member. Preferably, the rigid inserts are formed of a metallic material.

The rigid inserts may be elongate in form, such as a rod or a beam, or may be in the form of a plate. The cross sectional shape and size of the insert will depend upon the construction of the at least one connecting member and the nature of the connection between the insert and the at least one connecting member. Suitable cross sectional shapes for a rigid beam include I-shaped or H-shaped beams.

Where two or more rigid inserts are incorporated into the connection arrangement, the rigid inserts may be of the same form as each other, or a combination of different forms of insert may be used.

Preferably the thickness of each of the inserts decreases towards at least one of its outer edges. This is particularly preferable at the outer edges of the portion of the insert that is supported or integrated within the blade segment as well as the outer edges of the portion of the insert that is in contact with the at least one connecting member.

In addition or alternatively to the reduction in thickness of the insert at the outer edges of the portion of the insert that is supported within the blade segment, this portion of the insert may comprise a plurality of teeth or lugs extending from at least one edge thereof.

The at least one connecting member of the blades according to the invention is provided between adjacent blade segments and is connected against or around the rigid inserts extending from the ends of the adjacent segments. Suitable constructions for the at least one connecting member would be known to the skilled person. In preferred embodiments, the at least one connecting member comprises at least one connecting plate, which is fixed or attached to the rigid inserts extending from the ends of the blade segments to be connected together, as well as to the peripheral end of the support arm. In a particularly preferred embodiment, the at least one connecting member comprises at least one metal fishplate.

The connection between the at least one connecting member and the rigid inserts may be achieved through any conventional means. For example, the rigid inserts may be welded to the at least one connecting member or more preferably, the connection arrangement may further comprise one or more mechanical fasteners, such as nut and bolt fasteners, for connecting or clamping the rigid inserts to the support member. This enables the blade segments to be easily assembled and dissembled, for installation, repair and maintenance operations.

The connection between the at least one connecting member and the peripheral end of the support arm may also be achieved using any conventional means. In one preferred example, the peripheral end of the support arm is welded to the at least one connecting member so that together the support arm and at least one connecting member form a one-piece structure. However, alternatively one or more mechanical fasteners may be used to form the connection.

In certain preferred embodiments, the connection arrangement comprises a pair of opposed connecting members connected to opposed sides of the rigid inserts. With this arrangement, the rigid inserts are securely fixed between the opposed connecting members. In certain cases, it may be appropriate to use a larger number of connecting members, for example, three or four connecting members clamping the rigid inserts between them.

In some cases, the nature and position of the connection arrangement may mean that there is a gap between the ends of the outer surface layers of adjacent blade segments and therefore a discontinuity in the airfoil surface of the blade. In certain cases, during use of the blades on a VAWT, this discontinuity may result in aerodynamic perturbations, such as induced drag loads and wakes, which potentially reduce the aerodynamic performance of the turbine. The vertical axis wind turbine according to the invention may therefore optionally further comprise one or more aerodynamic covers arranged over and around the connection arrangement in order to maintain a substantially continuous airfoil surface in combination with the outer surfaces of the blade segments.

The inclusion of the aerodynamic covers may be advantageous to the performance of the turbine, since the covers are placed over the connection arrangement and are adapted to maintain the continuous airfoil surface of the blade as much as possible, thereby avoiding or reducing the aerodynamic impact of the connection arrangement. The aerodynamic covers may also provide the additional function of protecting the connection arrangement from the external environment.

The aerodynamic covers may be fixed to the connection arrangement, or the outer surface layers at the ends of the connected blades segments, or both. The aerodynamic covers may be formed of a composite material that provides a similar surface finish to the outer surface layers of the blade segments. Alternatively, the aerodynamic covers may be formed of metallic plates that have been shaped to fit around the connection arrangement.

In particularly preferred embodiments of the present invention, the connection arrangement as described above comprising the rigid inserts and the at least one connecting member is used to connect adjacent blade segments whilst the connection arrangement described above comprising opposed attachment plates is used to connect one or more additional support arms to the blades.

During use of the vertical axis wind turbines according to the present invention, the incident wind causes the blades to rotate around the central mast and the resultant aerodynamic torque is transferred to the central mast through the support arms. The central mast is typically fixed to the end of each support arm and is therefore caused to rotate upon rotation of the one or more blades. The rotation of the central mast is transferred to the rotor shaft of a generator through a sequence of bearings. The generator and bearings arrangements are provided within the base of the wind turbine and suitable arrangements would be known to the skilled person.

Preferably, the diameter of the central mast decreases from the bottom to the top thereof. The diameter of the mast therefore decreases with increasing height and this minimises the aerodynamic losses generated by the wake effect of the mast. The decrease in mast diameter is made possible because both the mechanical torque to be passed on by the mast and the bending moment experienced by the mast decrease with increasing height.

The invention will be further described, by way of example only, with reference to the following figures in which:
Figure 1 shows a schematic representation of a vertical axis wind turbine according to the present invention;
Figure 2 shows a top view of the vertical axis wind turbine of Figure 1;
Figure 3a shows a schematic, partial longitudinal cross-sectional view of a blade connection arrangement between adjacent blade segments and a support arm in the vertical axis wind turbine of Figures 1 and 2;
Figure 3b shows a schematic, partial transverse cross-sectional view of a blade attachment arrangement for connecting the additional support arms to the blades in the vertical axis wind turbine of Figure 1 and 2;
Figures 4a to 4d show schematic representations of four alternative blade configurations for a vertical axis wind turbine, with reference to a hypothetical x-axis, y-axis and z-axis;
Figures 5a to 5d show top view of the blade configurations illustrated in Figures 4a to 4d, respectively;
Figure 6 shows a schematic view of a twisted blade segment used to form one of the blades of the wind turbine shown in Figure 1; and
Figure 7 shows an enlarged, schematic cross sectional view through the base of the wind turbine of Figure 1.

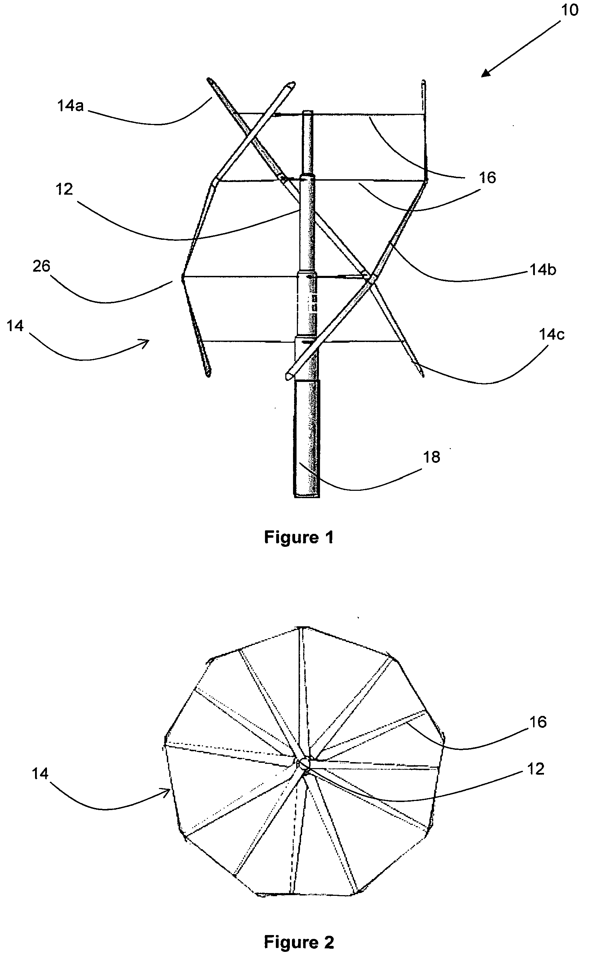

The wind turbine 10 shown schematically in Figure 1 is a vertical axis wind turbine comprising a central, rotating mast 12 and three identical blades 14, each of which extends by 120 degrees around the central mast so that the tip ends of each blade 14 are angularly spaced apart by 120 degrees (α). This provides a blade configuration which approximates a helical shape. The blades 14 are equally spaced apart so that in combination, the blades 14 extend 360 degrees around the central mast 12. The upper tip end of each blade 14 has an angular position that approximately coincides with that of the lower tip end of the adjacent blade, so that there is no overlap between the blades 14 except for their tips.

As shown in Figure 1, the central mast is formed of connected mast portions. Each mast portion has a substantially constant diameter but the diameter of the mast portions decreases with increasing height so that a mast portion has a smaller diameter than the mast portion below it. Adjacent mast portions are connected together by connecting ring members having a truncated conical form, with a diameter which varies between the diameters of the adjacent mast portions in order to maintain a continuous outer profile on the mast. This minimises the stress concentration and avoids sudden changes in the mast mechanical characteristics, such as inertia and cross section, along the length of the mast.

Each blade 14 is connected to the central, rotating mast 12 by four, spaced apart support arms 16. The support arms 16 extend substantially horizontally from the central rotating mast and the blades are mounted on the peripheral ends of the support arms. Due to the configuration of the blades 14 around the central mast 12, the support arms 16 for each blade 14 are spaced apart not only in the vertical direction, but also by approximately 40 degrees in the angular direction around the central mast. At each vertical level of the central mast, there are three support arms, one from each blade, which are evenly spaced apart by 120 degrees. Figure 2 shows a top view of the turbine 10 in which the arrangement of the support arms is visible.

Each of the blades 14 is formed of three connected blade segments: an upper blade segment 14a, a middle blade segment 14b and a lower blade segment 14c. The blade segments 14a,b,c are of a similar length and cross section to each other and are each formed of an inner foam core 24 formed of a polyurethane foam and a number of overlying, outer layers 26 of a glass reinforced epoxy resin composite material that may include carbon fibres to confer to the blade segments higher mechanical characteristics while minimizing the overall weight.

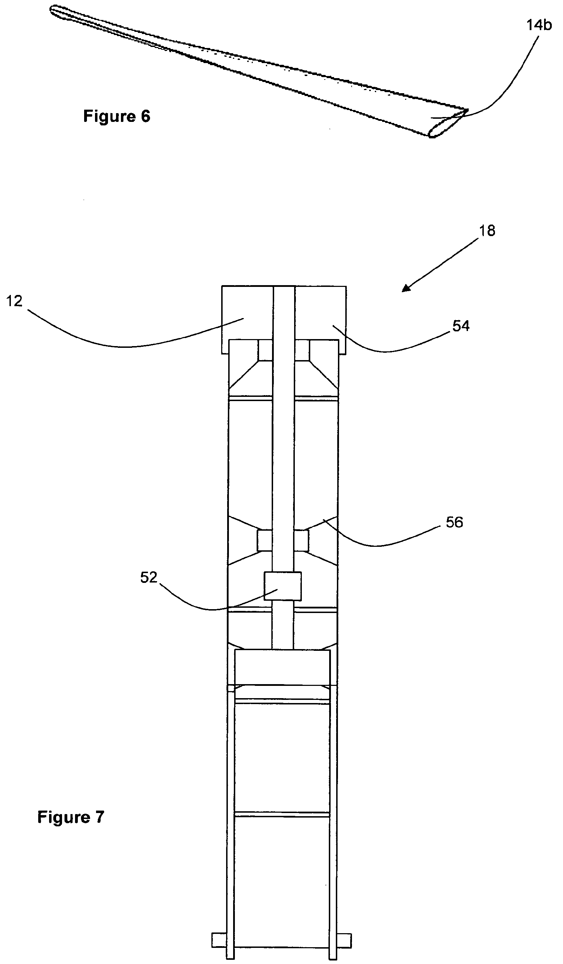

Each blade segment 14a,b,c has a substantially constant cross sectional shape, which is in the form of an aerodynamic 'teardrop' or aerodynamic airfoil profile in the conventional manner. As shown schematically in Figure 6, each blade segment is substantially straight overall, but is twisted by approximately 40 degrees around a straight, longitudinal twist axis so that at any point along the length of the blade segment the line joining the leading and trailing edges in the transverse airfoil cross section is tangential to the trajectory described by that transverse airfoil cross section during rotation of the blade 14 around the central mast 12.

The blade segments are connected with their respective longitudinal axes at an angle to each other, so that the blades 14 extend by 120 degrees around the central mast 12 as shown in Figure 1.

Adjacent blade segments are connected together by a connection arrangement, 22a,b. A first connection arrangement 22a is provided between the ends of the upper 14a and the middle 14b blade segments whilst a second connection arrangement 14b is provided between the ends of the middle 14b and the lower 14c blade segments. The first 22a and second 22b connection arrangements are of the same construction as each other and the description of connection arrangement 22a below applies equally to the connection arrangement 22b.

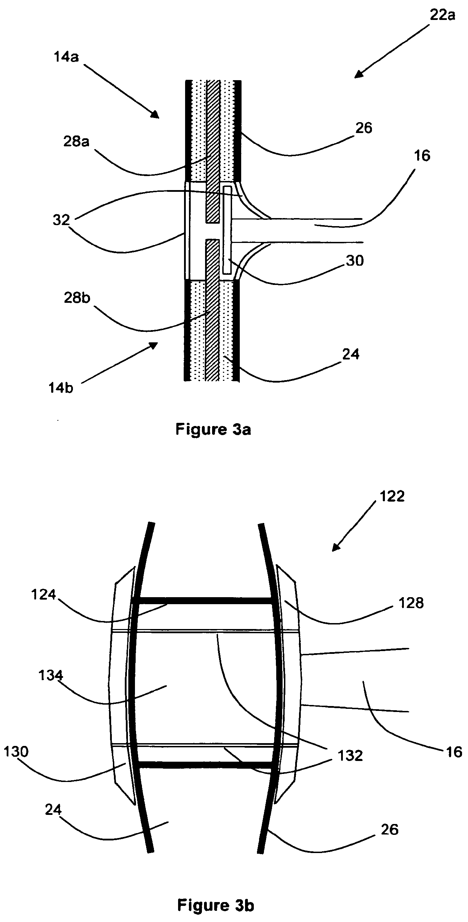

Figure 3a shows a schematic longitudinal cross-sectional view of the connection arrangement 22a between the upper blade segment 14a and the middle blade segment 14b. The connection arrangement 22a comprises a first metal insert 28a extending from the lower end of the upper blade segment 20a, a second metal insert 28b extending from the upper end of the middle blade segment 20b and a metal fishplate 30 connecting the ends of the elongate metal beams 28a,28b. Each of the metal inserts 28a,28b is in the form of a metal rod or plate which is embedded in the foam core at the end of the corresponding blade segment 14a or 14b and extends a short distance beyond the end of the blade segment. The extending ends of the metal inserts 28a,28b are bolted to the fishplate 30.

As shown in Figure 2, the support arm between the middle blade segment 14b and the lower blade segment 14c is also connected to the fishplate 30 by means of additional attachment bolts (not shown) or a welded joint. This support arm 16 is similarly connected to a fishplate in the connection arrangement 22b.

The upper and lower support arms 16 are connected to the upper 14a and lower 14c blade segments at a position away from the joints between the adjacent segments and for these support arms, the attachment arrangement 122 shown in Figure 3b is used. As can be seen from Figure 1, the upper and lower support arms are connected to the upper 14a and lower 14c blade segments at a distance from the tip ends of the blade 14. However, the upper support arm is provided at the top end of the central mast 12 and each blade 14 therefore extends a short distance above the mast 12.

The blade attachment arrangement 122 for each of the upper and lower support arms 16 comprises a first attachment plate 128 which is attached to the peripheral end of the support arm 16. The first attachment plate 128 is formed of a metallic material and is welded to the end of the support arm 16. The first attachment plate 128 is in contact with the external surface of the blade 14, on the flatter surface of the blade which is positioned closest to the central mast 12.

A second attachment plate 130 is provided on the opposite side of the blade cross section, in contact with the opposite flat surface of the blade 14 which is furthest from the central mast 12. The second attachment plate 130 is identical to the first attachment plate 128 and is positioned such that both the attachment plates are substantially parallel and opposed, with their inner surfaces facing inwardly towards the blade 14.

The first 128 and second 130 attachment plates are rectangular in shape and the outer edges of each plate are bevelled so that the thickness of the plate is reduced at the edges. The inner surfaces of both of the attachment plates are curved in shape, so that the inner surface of each plate substantially follows the external surface of the blade 14. This maximises the area of contact between each plate and the blade surface.

A pair of spaced apart bolt fasteners 132 extends between the first 128 and second 130 attachment plates, passing through holes that have been drilled through the blade 14. The bolt fasteners 132 are tightened so that the first 128 and second 130 attachment plates clamp the blade 14 between them.

In the region of the blade attachment arrangement 122, the inner foam core 24 is formed of high density foam 134 between a pair of rims 124, which each extends between opposed sides of the outer shell 26 of the blade to provide additional reinforcement to the blades. The outer shell 26 is also provided with additional layers of composite material compared to other parts of the blade, for reinforcement purposes.

Whilst Figure 3b shows only a partial cross section, it is clear that the attachment plates cover only a portion of the flatter surfaces of the blade and that the leading edge and the trailing edge are both fully uncovered.

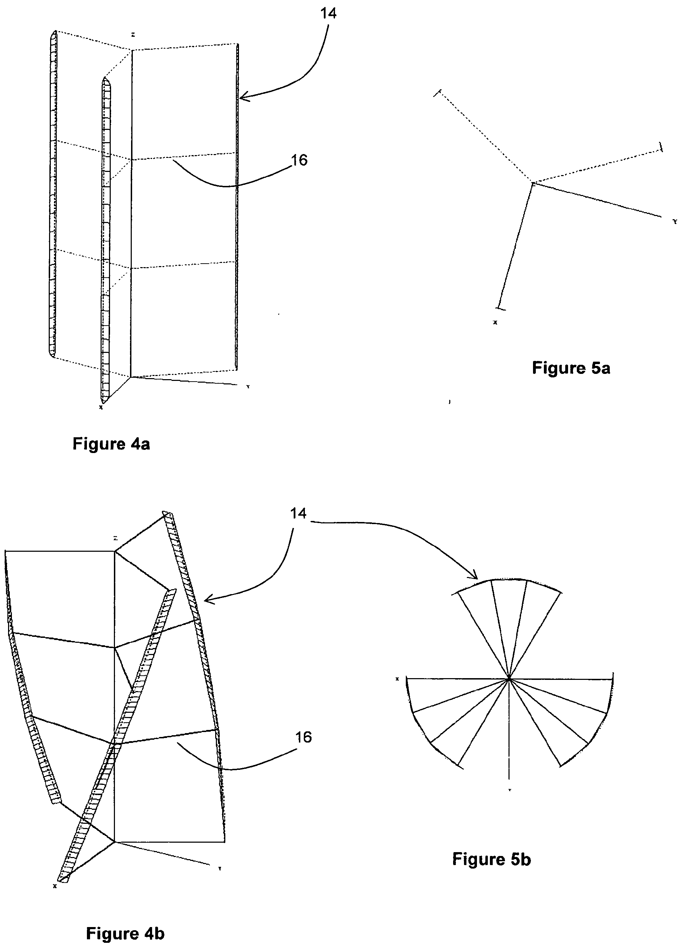

Figures 4a to 4d show alternative blade configurations in which the angular extent of the blades around the central mast is varied, such configurations are not according to the present invention. Top views of the different configurations are shown in Figures 5a to 5d, respectively. In each case, adjacent blade segments may be connected using the connection arrangement described above.

In Figures 4a and 5a, the angle α is 0 degrees, so that the blades do not extend at all around the central mast, but are substantially vertical. In this configuration, the blade segments do not need to be twisted, as described above.

In Figures 4b and 5b, the angle α is 60 degrees so that the tip ends of each blade are angularly spaced apart by 60 degrees. The blades are equally spaced apart around the central mast or axis and there is no overlap between any of the blades.

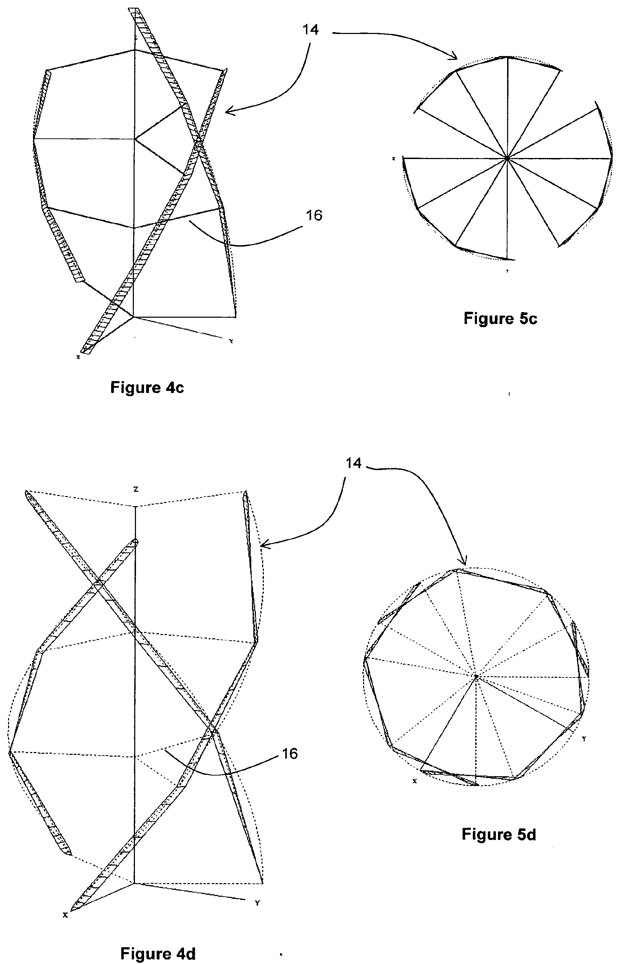

In Figures 4c and 5c, the angle α is 90 degrees and the blades are equally spaced apart so that as in Figure 4b, there is no overlap between any of the blades.

In Figures 4d and 5d, the angle α is 150 degrees and the blades are equally spaced apart so that there is approximately 30 degrees overlap between the upper tip end of one blade and the lower tip end of the adjacent blade.

During use, the incident wind causes the blades 14 to rotate about the central mast 12 and the aerodynamic torque is transmitted to the central mast 12 through the support arms 16. The central mast 12 is mounted in a base portion 18 of the turbine which includes a generator 50 as shown in Figure 7. The rotation of the central mast 12 is transferred directly to the rotor of the generator 52 using a bearings arrangement shown in Figure 7, comprising an upper radial bearing and an upper thrust bearing within an upper bearing box 54, and a lower radial bearing within a lower bearing box 56. Each bearing box 54, 56 includes internal and external cases separated by a composite or plastic or insulating rigid layer ensuring electrical insulation between the rotor and the stator.

## Claims

1. A vertical axis wind turbine (10) comprising:
a substantially vertical, central mast (12);
one or more blades (14), each blade having an upper tip end and a lower tip end and comprising two or more connected blade segments (14a, 14b, 14c), each defined by a longitudinal axis and a transverse airfoil cross section, wherein the ends of adjacent blade segments are connected together by means of a connection arrangement (22) provided between the adjacent blade segments and wherein the vertical axis wind turbine further comprises
at least one support arm (16) extending outwardly from the central mast (12), wherein the peripheral end of each support arm is connected to one of the blades through the connection arrangement (22) of that blade; and
**characterised in that** each blade (14) extends around the central mast (12) such that the upper and lower tip ends of the blade are angularly displaced from each other about the central mast (12) by an angle of α degrees, wherein α is greater than zero; and
further comprising one or more additional support arms (16) extending outwardly from the central mast (12) and each connected to one of the blades at a position between the distal ends of a blade segment.

2. A vertical axis wind turbine (10) according to claim 1 wherein the longitudinal axis of each of the blade segments (14a, 14b, 14c) is substantially straight.

3. A vertical axis wind turbine (10) according to claim 1 wherein the longitudinal axis of each of the blade segments (14a, 14b, 14c) is curved.

4. A vertical axis wind turbine (10) according to any preceding claim wherein the angle α is between 60 and 180 degrees.

5. A vertical axis wind turbine (10) according to any preceding claim wherein adjacent blade segments (14a, 14b, 14c) are connected such that the longitudinal axes of the adjacent blade segments form an angle of less than 45 degrees to each other in both the horizontal plane and the vertical plane.

6. A vertical axis wind turbine (10) according to any preceding claim wherein the blade segments (14a, 14b, 14c) are arranged such that the one or more blades approximate a helical blade shape.

7. A vertical axis wind turbine (10) according to any preceding claim wherein each blade segment (14a, 14b, 14c) is twisted about a longitudinal twist axis so that at any point along the length of the blade segment (14a, 14b, 14c) the line joining the leading and trailing edges in the transverse airfoil cross section is approximately tangential to the trajectory described by that transverse airfoil cross section during rotation of the blade around the central mast (12).

8. A vertical axis wind turbine (10) according to any preceding claim wherein each blade is formed of three connected blade segments (14a, 14b, 14c) connected to each other by means of first and second connection arrangements (22a, 22b) and wherein the turbine (10) comprises at least first and second support arms (16) connected to the first and second connection arrangements (22a, 22b), respectively, and angularly spaced apart around the central mast (12).

9. A vertical axis wind turbine (10) according to any preceding claim wherein each blade (14) is supported by an upper additional support arm (16) each connected to the upper blade segment (14a) at a position between the distal ends thereof, and a lower additional support arm (16) connected to the lower blade segment (14c) at a position between the distal ends thereof.

10. A vertical axis wind turbine (10) according to any preceding claim wherein the diameter of the central mast (12) decreases from the bottom to the top thereof.

## Patentansprüche

1. Windturbine (10) mit vertikaler Achse, Folgendes aufweisend:
einen im Wesentlichen vertikalen, zentralen Mast (12);
ein Blatt oder mehrere Blätter (14), wobei jedes Blatt ein oberes Spitzenende und ein unteres Spitzenende hat und zwei oder mehr verbundene Blattsegmente (14a, 14b, 14c) aufweist, wovon jedes durch eine Längsachse und ein Schaufelblattquerprofil definiert ist, wobei die Enden benachbarter Blattsegmente mittels einer Verbindungsanordnung (22) miteinander verbunden sind, die zwischen den benachbarten Blattsegmenten vorgesehen ist, und
wobei die Windturbine mit vertikaler Achse darüber hinaus aufweist
mindestens einen Tragarm (16), der sich vom zentralen Mast (12) nach außen erstreckt, wobei das Umfangsende jedes Tragarms mit einem der Blätter durch die Verbindungsanordnung (22) dieses Blatts verbunden ist; und
**dadurch gekennzeichnet, dass** sich jedes Blatt (14) so um den zentralen Mast (12) erstreckt, dass das obere und untere Spitzenende des Blatts voneinander um den zentralen Mast (12) um einen Winkel von α Grad winkelversetzt sind, wobei α größer als Null ist; und
darüber hinaus einen oder mehrere zusätzliche/n Tragarm/e (16) umfassend, der bzw. die sich vom zentralen Mast (12) nach außen erstreckt bzw. erstrecken und jeweils mit einem der Blätter an einer Position zwischen den distalen Enden eines Blattsegments verbunden ist bzw. sind.

2. Windturbine (10) mit vertikaler Achse nach Anspruch 1, wobei die Längsachse jedes der Blattsegmente (14a, 14b, 14c) im Wesentlichen gerade ist.

3. Windturbine (10) mit vertikaler Achse nach Anspruch 1, wobei die Längsachse jedes der Blattsegmente (14a, 14b, 14c) gekrümmt ist.

4. Windturbine (10) mit vertikaler Achse nach einem der vorhergehenden Ansprüche, wobei der Winkel α zwischen 60 und 180 Grad beträgt.

5. Windturbine (10) mit vertikaler Achse nach einem der vorhergehenden Ansprüche, wobei benachbarte Blattsegmente (14a, 14b, 14c) so verbunden sind, dass die Längsachsen der benachbarten Blattsegmente sowohl in der horizontalen Ebene als auch der vertikalen Ebene zueinander einen Winkel von weniger als 45 Grad bilden.

6. Windturbine (10) mit vertikaler Achse nach einem der vorhergehenden Ansprüche, wobei die Blattsegmente (14a, 14b, 14c) so angeordnet sind, dass das eine Blatt oder die mehreren Blätter sich einer schraubenförmigen Blattform annähert bzw. annähern.

7. Windturbine (10) mit vertikaler Achse nach einem der vorhergehenden Ansprüche, wobei jedes Blattsegment (14a, 14b, 14c) um eine Längsverwindungsachse verwunden ist, so dass an jedem Punkt entlang der Länge des Blattsegments (14a, 14b, 14c) die Linie, welche die vorlaufenden und nachlaufenden Ränder im Schaufelblattquerprofil verbindet, ungefähr tangential zur der Bahn ist, die durch das Schaufelblattquerprofil während einer Drehung des Blatts um den zentralen Mast (12) gezogen wird.

8. Windturbine (10) mit vertikaler Achse nach einem der vorhergehenden Ansprüche, wobei jedes Blatt aus drei verbundenen Blattsegmenten (14a, 14b, 14c) besteht, die mittels erster und zweiter Verbindungsanordnungen (22a, 22b) miteinander verbunden sind, und wobei die Turbine (10) mindestens erste und zweite Tragarme (16) aufweist, die mit den ersten bzw. zweiten Verbindungsanordnungen verbunden und um den zentralen Mast (12) voneinander winkelbeabstandet sind.

9. Windturbine (10) mit vertikaler Achse nach einem der vorhergehenden Ansprüche, wobei jedes Blatt (14) von einem oberen zusätzlichen Tragarm (16), der jeweils mit dem oberen Blattsegment (14a) an einer Position zwischen dessen distalen Enden verbunden ist, und einem unteren zusätzlichen Tragarm (16) getragen ist, der mit dem unteren Blattsegment (14c) an einer Position zwischen dessen distalen Enden verbunden ist.

10. Windturbine (10) mit vertikaler Achse nach einem der vorhergehenden Ansprüche, wobei der Durchmesser des zentralen Masts (12) von dessen Unterseite zu dessen Oberseite abnimmt.

## Revendications

1. Eolienne à axe vertical (10) comprenant :
un mât central (12) sensiblement vertical ;
une ou plusieurs pales (14), chaque pale ayant une extrémité de pointe supérieure et une extrémité de pointe inférieure et comprenant deux segments de pale raccordés (14a, 14b, 14c) ou plus, chacun défini par un axe longitudinal et une section de surface portante transversale, dans laquelle les extrémités des segments de pale adjacents sont raccordées ensemble au moyen d'un agencement de raccordement (22) prévu entre les segments de pale adjacents, et dans laquelle l'éolienne à axe vertical comprend en outre :
au moins un bras de support (16) s'étendant vers l'extérieur à partir du mât central (12), dans lequel l'extrémité périphérique de chaque bras de support est raccordée à l'une des pales par le biais de l'agencement de raccordement (22) de cette pale ; et
**caractérisée en ce que** chaque pale (14) s'étend autour du mât central (12) de sorte que les extrémités de pointe de supérieure et inférieure de la pale sont déplacées de manière angulaire les unes par rapport aux autres autour du mât central (12) par un angle de α degrés, dans laquelle α est supérieur à zéro ; et
comprenant en outre un ou plusieurs bras de support supplémentaires (16) s'étendant vers l'extérieur à partir du mât central (12) et chacun raccordé à l'une des pales dans une position située entre les extrémités distales du segment de pale.

2. Eolienne à axe vertical (10) selon la revendication 1, dans laquelle l'axe longitudinal de chacun des segments de pale (14a, 14b, 14c) est sensiblement droit.

3. Eolienne à axe vertical (10) selon la revendication 1, dans laquelle l'axe longitudinal de chacun des segments de pale (14a, 14b, 14c) est incurvé.

4. Eolienne à axe vertical (10) selon l'une quelconque des revendications précédentes, dans laquelle l'angle α est compris entre 60 et 180 degrés.

5. Eolienne à axe vertical (10) selon l'une quelconque des revendications précédentes, dans laquelle les segments de pale (14a, 14b, 14c) adjacents sont raccordés de sorte que les axes longitudinaux des segments de pale adjacents forment un angle inférieur à 45 degrés entre eux à la fois dans le plan horizontal et le plan vertical.

6. Eolienne à axe vertical (10) selon l'une quelconque des revendications précédentes, dans laquelle les segments de pale (14a, 14b, 14c) sont agencés de sorte que les unes ou plusieurs pales s'approchent d'une forme de pale hélicoïdale.

7. Eolienne à axe vertical (10) selon l'une quelconque des revendications précédentes, dans laquelle chaque segment de pale (14a, 14b, 14c) est tordu autour d'un axe de torsion longitudinal de sorte qu'à n'importe quel point le long de la longueur du segment de pale (14a, 14b, 14c), la ligne assemblant les bords d'attaque et de fuite dans la section de surface portante transversale est approximativement tangentielle à la trajectoire décrite par cette section de surface portante transversale pendant la rotation de la pale autour du mât central (12).

8. Eolienne à axe vertical (10) selon l'une quelconque des revendications précédentes, dans laquelle chaque pale est formée avec trois segments de pale raccordés (14a, 14b, 14c) raccordés entre eux au moyen de premier et second agencements de raccordement (22a, 22b) et dans laquelle l'éolienne (10) comprend au moins des premier et second bras de support (16) raccordés aux premier et second agencements de raccordement (22a, 22b) respectivement, et angulairement espacés autour du mât central (12).

9. Eolienne à axe vertical (10) selon l'une quelconque des revendications précédentes, dans laquelle chaque pale (14) est supportée par un bras de support supplémentaire supérieur (16), chacun raccordé au segment de pale supérieur (14a) dans une position située entre ses extrémités distales, et un bras de support supplémentaire inférieur (16) raccordé au segment de pale inférieur (14c) dans une positon située entre ses extrémités distales.

10. Eolienne à axe vertical (10) selon l'une quelconque des revendications précédentes, dans laquelle le diamètre du mât central (12) diminue du fond jusqu'à son sommet.
